# EUROPÄISCHE PATENTSCHRIFT

(11) **EP 3 587 750 B1**
(45) Veröffentlichungstag und Bekanntmachung des Hinweises auf die Patenterteilung: **02.06.2021**
(21) Anmeldenummer: 19182166.9
(22) Anmeldetag: 25.06.2019
(51) Int. Cl.: F01D 25/24

(54) **LEITSCHAUFELANORDNUNG FÜR EINE STRÖMUNGSMASCHINE**
GUIDE VANE ASSEMBLY FOR A FLOW ENGINE
DISPOSITIF D'AUBE DIRECTRICE POUR UNE TURBOMACHINE

(30) Priorität: 28.06.2018 DE 102018210597
(43) Veröffentlichungstag der Anmeldung: 01.01.2020
(73) Patentinhaber: MTU Aero Engines AG, 80995 München (DE)
(72) Erfinder: Feldmann, Manfred, 82223 Eichenau (DE)

(56) Entgegenhaltungen:
- US-A1- 2002 048 512
- US-A1- 2011 056 055
- US-A1- 2016 290 168

## Beschreibung

### Technisches Gebiet

Die vorliegende Erfindung betrifft eine Leitschaufelanordnung für eine Strömungsmaschine, mit einem Leitschaufelsegment und einem Gehäuseteil.

### Stand der Technik

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert. Die Turbine ist typischerweise in mehrere Module untergliedert, kann also bspw. ein Hochdruck- und ein Niederdruckturbinenmodul aufweisen. Jedes der Turbinenmodule umfasst dann in der Regel mehrere Stufen, wobei jede Stufe aus einem Leitschaufelkranz und einem stromab darauffolgenden Laufschaufelkranz aufgebaut ist. Die vorliegend in Rede stehende Leitschaufelanordnung umfasst zum einen ein Leitschaufelsegment, welches in dem Modul Teil eines entsprechenden Leitschaufelkranzes ist, und zum anderen ein Gehäuseteil radial außerhalb davon, an dem das Leitschaufelsegment befestigt ist.

Ein Beispiel für eine Leitschaufelanordnung ist aus der US2016/290168A1 bekannt.

### Darstellung der Erfindung

Der vorliegenden Erfindung liegt das technische Problem zugrunde, eine besonders vorteilhafte Leitschaufelanordnung anzugeben.

Dies wird erfindungsgemäß mit der Leitschaufelanordnung gemäß Anspruch 1 gelöst, und zwar durch eine besonders vorteilhafte Ausgestaltung der formschlüssigen Verbindung zwischen Leitschaufelsegment und Gehäuseteil. Zu deren Beschreibung wird auf verschiedene Umfangssegmente Bezug genommen, was sich auf einen Umlauf um die Längsachse der Strömungsmaschine (siehe unten im Detail) bezieht. Im Einzelnen betrifft der vorliegende Gegenstand den Formschluss zwischen einem hinteren Leitschaufelhaken der sich vom Außendeckband des Leitschaufelsegments nach radial außen erhebt, und einem radial innen am Gehäuseteil angeordneten Gehäusehaken.

Eine erste Besonderheit liegt nun darin, dass der Leitschaufelhaken in einem ersten Umfangssegment eine axial vordere und eine axiale hintere Wand aufweist, die miteinander eine nach radial außen offene Nut bilden. In dieser ist ein Ringabschnitt des Gehäusehakens angeordnet, womit das Leitschaufelsegment und das Gehäuseteil in Axialrichtung lagefixiert sind. Gegenüber einem alternativ denkbaren Lösungsansatz, nämlich dem Vorsehen eines gesonderten Sicherungsrings (der z. B. in einen Einstich im Gehäuseteil greifen würde, siehe unten im Detail), kann der erfindungsgemäße Ansatz bereits aufgrund einer geringeren Zahl an Einzelteilen vorteilhaft sein. Die Axialfixierung ergibt sich integral aus der Form des hinteren Leitschaufelhakens selbst, der in einem Axialschnitt betrachtet mit der Nut eine U-förmige Aufnahme bildet (in dem ersten Umfangssegment).

Eine weitere Besonderheit liegt darin, dass diese U-Form nicht durchgehend über den Umlauf gezogen ist, sondern die hintere Wand in einem zweiten Umfangssegment unterbrochen ist. In diese Unterbrechung der hinteren Wand des Leitschaufelhakens greift der Gehäusehaken ein, und zwar mit einem an dem Ringabschnitt nach axial hinten hervortretenden Nocken. Damit wird, wiederum durch die Formgebung der Haken integral, also ohne gesonderten Sicherungsstift oder dergleichen, eine Umfangssicherung des Gehäuseteils geschaffen. Die integrale Ausführung kann nicht nur wegen der verringerten Zahl an Einzelteilen, sondern bspw. auch aus Dichtigkeitsgründen von Vorteil sein. Ein gesondert eingesetzter Sicherungsstift würde nämlich bspw. eine Schlitzung erfordern, was letztlich auch thermisch induzierte Schäden begünstigen könnte. Ferner kann der axial nach hinten hervortretenden Nocken bspw. auch insoweit von Vorteil sein, als er beim Zusammenbau des Moduls, der typischerweise von vorne nach hinten erfolgt, nach hinten sichtbar und somit einer optischen Kontrolle zugänglich ist (anders als bspw. ein an der Vorderseite angeordnetes Formschlusselement).

Bevorzugte Ausgestaltungen finden sich in den abhängigen Ansprüchen und der gesamten Beschreibung, wobei bei der Darstellung der Merkmale nicht immer im Einzelnen zwischen Vorrichtungs-, Verfahrens- bzw. Verwendungsaspekten unterschieden wird; jedenfalls implizit ist die Offenbarung hinsichtlich sämtlicher Anspruchskategorien zu lesen. Sie betrifft also insbesondere stets sowohl die Leitschaufelanordnung als auch ein Turbinenmodul mit einer solchen bzw. entsprechende Verwendungen.

Generell bezieht sich im Rahmen dieser Offenbarung "axial" auf die Längsachse des Turbinenmoduls, mithin also die Längsachse der Strömungsmaschine, die bspw. mit einer Drehachse der Rotoren zusammenfällt. "Radial" betrifft die dazu senkrechten, davon weg weisenden Radialrichtungen, und ein "Umlauf" bzw. "umlaufend" oder die "Umlaufrichtung" betreffen die Drehung um die Längsachse (ohne Unterscheidung, ob links- oder rechtsdrehend). "Vorne" und "hinten" beziehen sich jeweils auf jene axiale Richtung, in welcher der Druck abnimmt, "vorne" ist also die druckhöhere und "hinten" die druckniedere Seite. Im Falle des Verdichters nimmt der Druck in Strömungsrichtung des Verdichtergases zu, also in entgegengesetzter Richtung ab, sodass das Verdichtergas "hintere" vor "vorderen" Teilen passiert. Im bevorzugten Fall der Turbine nimmt der Druck in Strömungsrichtung ab, passiert das Heißgas also "vordere" Teile axial vor "hinteren" Teilen ("vorne" meint dann also stromauf und "hinten" stromab).

"Ein" und "eine" sind im Rahmen dieser Offenbarung ohne ausdrücklich gegenteilige Angabe als unbestimmte Artikel und damit immer auch als "mindestens ein" bzw. "mindestens eine" zu lesen. Es kann also bspw. das Leitschaufelsegment als sogenanntes Mehrfachsegment auch mehrere Leitschaufeln aufweisen, andererseits sind aber auch Leitschaufelsegmente mit jeweils einer einzigen Leitschaufel möglich.

Vorstehend wurden bereits die Vorteile der integralen Axialsicherung gegenüber einem gesonderten Sicherungsring diskutiert. Ein solcher wäre als in das Gehäuseteil selbst eingesetztes Element auch hinsichtlich der thermischen bzw. thermomechanischen Belastung des Leitschaufelhakens nachteilig. Es wäre nämlich auch die radiale Trennfläche zwischen Leitschaufelhaken und Gehäuse entsprechend weit nach radial außen gesetzt, würde also der radiale Temperaturgradient zwischen Außendeckband und Gehäuse im Wesentlichen ausschließlich über den Leitschaufelhaken anfallen, was für diesen eine entsprechend große Belastung bedeutet und Versagensursache sein kann. Mit der erfindungsgemäßen Anordnung des nach radial innen hervortretenden Gehäusehakens lässt sich die radiale Trennfläche zwischen Leitschaufel- und Gehäusehaken hingegen freier platzieren. Insbesondere ist eine Anordnung derart möglich, dass sich der Temperaturgradient auf den Leitschaufelhaken einerseits und den Gehäusehakens andererseits verteilt.

Nochmals zu der Formgebung von Leitschaufel- und Gehäusehaken: soweit der Leitschaufelhaken in dem ersten Umfangssegment eine U-Form bildet, ist diese dann in dem zweiten Umfangssegment unterbrochen, liegt dort also bspw. eine L-Form vor. Im Allgemeinen könnte die hintere Wand, also der hintere Schenkel der U-Form, im Bereich der Unterbrechung z. B. auch nur radial verkürzt sein (also nicht vollständig entfernt), womit gleichwohl ein in Umlauf- bzw. Umfangsrichtung gesicherter Eingriff des Gehäusehakens möglich wäre. Bevorzugt liegt jedoch im zweiten Umfangssegment eine L-Form vor, was sich (wie auch die U-Form) auf einen Axialschnitt bezieht, also auf eine Schnittebene, welche die Längsachse beinhaltet.

In bevorzugter Ausgestaltung ist der Ringabschnitt des Leitschaufelhakens dann in einem dritten Umfangssegment wieder zwischen der vorderen und der hinteren Wand des Leitschaufelhakens axial gehalten. Damit ist auch der nach axial hinten hervortretenden Nocken des Gehäusehakens in beiden Umfangsrichtungen gesichert. Das erste, zweite und dritte Umfangssegment folgen in einer der Umfangs- bzw. Umlaufrichtungen (egal ob links- oder rechtsherum) in der Reihenfolge ihrer Benennung aufeinander (was bevorzugt auch für ein viertes bzw. fünftes Umfangssegment gilt)

In bevorzugter Ausgestaltung ist die hintere Wand mit einer weiteren Unterbrechung vorgesehen, und zwar in einem vierten Umfangssegment (welches auf das dritte folgt). Die hintere Wand ist dann also nur in dem ersten und dem dritten Umfangssegment vorgesehen (und gegebenenfalls in einem vierten), ist also in anderen Worten in Umlaufrichtung auf vergleichsweise kleine Bereiche beschränkt. Insgesamt kann die hintere Wand dann mit der Beschränkung auf die fraglichen Bereiche gewissermaßen lokal nasen- bzw. nockenförmig ausgebildet sein. Dies kann z. B. insoweit von Vorteil sein, als sich damit das Risiko von thermisch bedingten Schäden verringern lässt. Dies betrifft einen etwaigen axialen Temperaturgradienten, der durch diese Maßnahme zwar an sich nicht verringert wird (dazu wird bevorzugt ein Sicherungselement mit Dichtabschnitt vorgesehen, siehe unten), der dort bildlich gesprochen auf weniger Material wirken kann, sodass die thermisch induziert aufgebauten Kräfte kleiner sind.

Dieser Vorteil der weiteren Unterbrechung kommt auch darin zum Ausdruck, dass in dieser bevorzugt kein weiterer Nocken des Gehäusehakens angeordnet ist. Anders als die Unterbrechung im zweiten Umfangssegment, welche die Umfangssicherung schafft, motiviert sich die weitere Unterbrechung über die Verringerung thermisch induzierter Spannungen und auch über eine Gewichtsreduzierung. Bezogen auf eine in Umlaufrichtung genommene Erstreckung des Außendeckbands des Leitschaufelsegments kann sich das vierte Umfangssegment (mit der weiteren Unterbrechung) bspw. über einen deutlich größeren Anteil als die anderen Umfangssegmente erstrecken; es kann sich bspw. über mindestens 30 %, 40 % bzw. 50 % der Erstreckung des Außendeckbands erstrecken (möglichen Obergrenzen können z. B. bei höchstens 80 % bzw. 70 % liegen).

Bei einer bevorzugten Ausführungsform ist dann in einem fünften Umfangssegment, welches auf das vierte und damit die weitere Unterbrechung folgt, wiederum eine nach radial außen offene Nut ausgebildet. In einem Axialschnitt betrachtet bildet der Leitschaufelhaken in dem fünften Umfangssegment also wiederum eine U-Form, in welcher der Ringabschnitt des Gehäusehakens axial gehalten ist.

In bevorzugter Ausgestaltung grenzen das erste und das fünfte Umfangssegment jeweils an ein umlaufseitiges Ende des Außendeckbands (die Enden liegen in Umlaufrichtung einander entgegengesetzt). Dies kann bspw. auch insoweit von Vorteil, als das Leitschaufelsegment damit (zusammengesetzt mit umlaufend benachbarten Leitschaufelsegmenten) gegen eine Drehung um eine Hochachse gesichert ist.

Wenngleich die hintere Wand bevorzugt mehrfach unterbrochen ist, ist die vordere Wand des Leitschaufelhakens in bevorzugter Ausgestaltung ohne Unterbrechung vorgesehen. Sie erstreckt sich also zwischen den einander entgegengesetzten umlaufseitigen Enden des Leitschaufelhakens durchgehend, also unterbrechungsfrei. Damit ist auch die entsprechende Anlagefläche zwischen dem Ringabschnitt des Gehäusehakens und der vorderen Wand des Leitschaufelhakens unterbrechungsfrei, was z. B. hinsichtlich der Dichtigkeit von Vorteil ist. Besagte Anlagefläche hat generell einen "axialen" Anteil, der das Leitschaufelsegment gegen einen Axialversatz nach hinten hält (die entsprechende Anlagefläche hat im Axialschnitt betrachtet typischerweise eine radiale Erstreckung). Ferner gibt es einen "radialen" Anteil (Anlage am Nutgrund). Da auf das Leitschaufelsegment "nach hinten" vergleichsweise große Kräfte wirken, ist die unterbrechungsfreie Anlage auch in mechanischer Hinsicht von Vorteil.

In bevorzugter Ausgestaltung gibt es ein zusätzliches Sicherungselement, welches den Leitschaufelhaken und den Gehäusehakens zumindest segmentweise umschließt. Dazu bildet das Sicherungselement eine nach vorne offene U-Form (im Axialschnitt betrachtet) und wird es von hinten auf die zusammengesetzten Haken aufgeschoben. Bevorzugt ist das Sicherungselement ein Mantelringsegment. Mit der nach vorne gewandten U-Form hält es die Haken dann hinsichtlich der radialen Richtung zusammen, insbesondere im unbelasteten Zustand (wenn das Leitschaufelsegment nicht aufgrund des Betriebsdrucks nach radial außen gedrückt wird).

In bevorzugter Ausgestaltung bildet der Gehäusehakens mit dem Ringabschnitt in einem Axialschnitt betrachtet eine L-Form, und zwar nicht nur mit dem Nocken im zweiten Umfangssegment, sondern auch (bereits) mit dem Ringabschnitt im ersten Umfangssegment (mit einem im Vergleich kürzeren Schenkel dort). Es ist also auch dort eine L-Form ausgebildet, wo der Ringabschnitt axial zwischen vorderer und hinterer Wand gehalten ist. Dabei weist der liegende Schenkel der L-Form nach hinten und wird von dem Sicherungselement nach radial außen eingefasst.

Bei einer bevorzugten Ausfuhrungsform weist das Sicherungselement einen Dichtabschnitt auf, der an einer nach radial außen weisenden Außenwandfläche des Außendeckbands an liegt. Im Axialschnitt betrachtet erstreckt sich dieser Dichtabschnitt von der U-Form weg nach axial hinten, also gewissermaßen entgegengesetzt zu den Schenkeln der U-Form. Dabei setzt der Dichtabschnitt idealerweise am radial inneren Schenkel der U-Form an, was eine gute Abschirmung des radial außerhalb liegenden Verbindungsbereichs zwischen Gehäuse- und Leitschaufelhaken schafft. Es lässt sich also insbesondere der U-förmige bzw. dann auch unterbrochene Bereich zum Heißgaskanal hin abschirmen, was Temperaturgradienten reduzieren helfen kann. Insoweit kann sich eine vorteilhafte Wechselwirkung mit den vorstehend geschilderten Maßnahmen (Verringerung der Materialmenge, auf welche Temperaturgradienten wirken) ergeben, als die verbleibenden Belastungen in Summe auf ein unkritisches Niveau gebracht werden können.

Vorzugsweise bildet das Sicherungselement eine Gaskanalbegrenzung, welche radial an Laufschaufeln angrenzt, die zum Leitschaufelsegment axial benachbart angeordnet sind. Dabei kann das Sicherungselement zudem auch einen Einlaufbelag, bspw. in Form einer Honigwabendichtung, für die Laufschaufeln aufweisen. Dadurch können mit vorteilhaft wenig und leicht zu montierenden Teilen Leitschaufeln am Gehäuse befestigt werden und gleichzeitig eine bündig und dicht anschließende Gaskanalbegrenzung bzw. -Innenwandung im axialen Bereich der nachfolgenden Laufschaufeln bereitgestellt werden.

Das Sicherungselement mit integralen Dichtabschnitt ist auch hinsichtlich der Integration unterschiedlicher Funktionen von Vorteil (Axialsicherung und Radialfixierung), was Einzelteile reduzieren helfen kann. Das Sicherungselement kann im Allgemeinen bspw. auch ein Frästeil sein, bevorzugt wird es aus Blech gestanzt bzw. gebogen.

In bevorzugter Ausgestaltung liegt der Dichtabschnitt in einem Bereich der Außenwandfläche des Außendeckband an, der an dessen Hinterkante grenzt. Die Dichtstelle ist also soweit möglich nach axial hinten gezogen, was auch hinsichtlich der Abschirmung von Vorteil sein kann.

Bei einer bevorzugten Ausführungsform weist das Sicherungselement einen nach axial vorne hervortretenden Nocken auf, der gemeinsam mit dem Nocken des Gehäusehakens in der Unterbrechung der hinteren Wand des Leitschaufelhakens angeordnet ist. Die beiden Nocken sind also radial aufeinander gesetzt, bevorzugt liegt der Nocken des Sicherungselements radial innen und jener des Gehäuseteils radial außen. Damit wird also mit derselben Unterbrechung, die auch der Umfangssicherung des Gehäuseteils dient, das Sicherungselement in Umfangsrichtung gesichert. Auch insoweit ist kein gesonderter Sicherungsstift oder dergleichen erforderlich.

Insgesamt kann das Sicherungselement mit seinen unterschiedlichen Abschnitten (U-Form mit Dichtabschnitt und gegebenenfalls weiterem Schenkel) eine nach radial außen offene Aufnahme bilden, in welche ein Dämmmaterial eingesetzt werden kann. Der erfindungsgemäße Gegenstand eröffnet auch weitere Möglichkeiten, es kann nämlich bspw. vor den Haken ein Hitzeschild radial zwischen Außendeckband und Gehäuseteil angeordnet sein (was aber an sich bekannt ist). Ein solches Hitzeschild kann bspw. am Gehäusehaken montiert sein.

Die Erfindung betrifft auch ein Turbinenmodul mit einer vorliegend offenbarten Leitschaufelanordnung. In einem jeweiligen Leitschaufelkranz können dabei umlaufend aufeinander folgend mehrere entsprechend ausgestaltete Leitschaufelanordnungen vorgesehen sein. Dabei ist insbesondere auch eine Ausgestaltung dahingehend möglich, dass mit einem Umfangsversatz Spalte verdeckt werden. Es kann sich bspw. das Sicherungselement mit der U-Form über die Verbindungsstelle zwischen zwei Außendeckbändern hinweg erstrecken.

Die Erfindung betrifft ferner auch die Verwendung eines solchen Turbinenmoduls bzw. einer vorliegend offenbarten Leitschaufelanordnung in einer Strömungsmaschine, insbesondere in einem Strahltriebwerk, bspw. einem Mantelstromtriebwerk.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: ein Strahltriebwerk in einem Axialschnitt;
- Figur 2: die Teile einer erfindungsgemäßen Leitschaufelanordnung in einer teilweise geschnittenen Seitenansicht, und zwar vor dem Zusammensetzen;
- Figur 3: eine Axialansicht zu Figur 2;
- Figur 4: die Teile gemäß Figur 2 im zusammengesetzten Zustand.

### Bevorzugte Ausführung der Erfindung

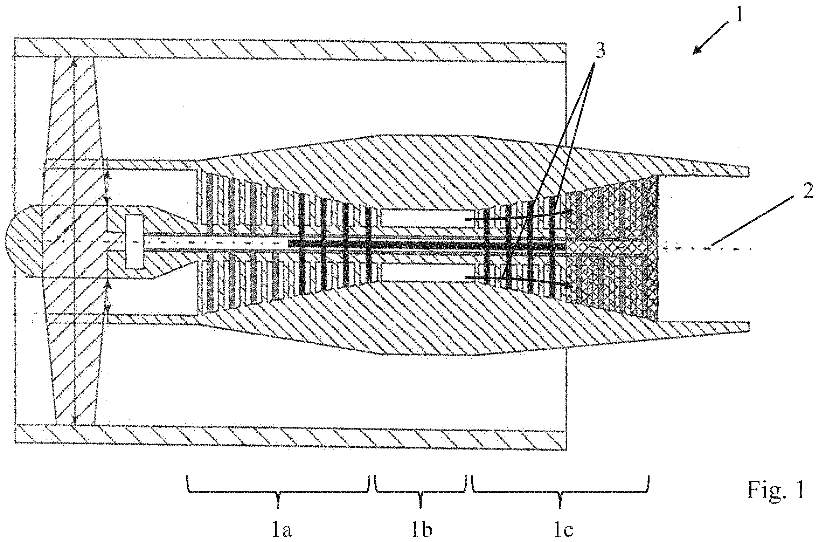

**Fig. 1** zeigt eine Strömungsmaschine 1, konkret ein Mantelstromtriebwerk, in einem Axialschnitt. Die Strömungsmaschine 1 gliedert sich funktional in Verdichter 1 A, Brennkammer 1 B und Turbine 1 C. Sowohl der Verdichter 1 A als auch die Turbine 1 C sind jeweils aus mehreren Stufen aufgebaut, jede Stufe setzt sich aus einem Leit- und einem darauffolgenden Laufschaufelkranz zusammen. Die Laufschaufelkränze rotieren im Betrieb um die Längsachse 2 der Strömungsmaschine 1. Im Verdichter 1 A wird die angesaugte Luft komprimiert, und dann in der nachgelagerten Brennkammer 1 B mit hinzugemischtem Kerosin verbrannt. Das Heißgas durchströmt den Heißgaskanal 3 und treibt dabei die Laufschaufelkränze an, die um die Längsachse 2 rotieren.

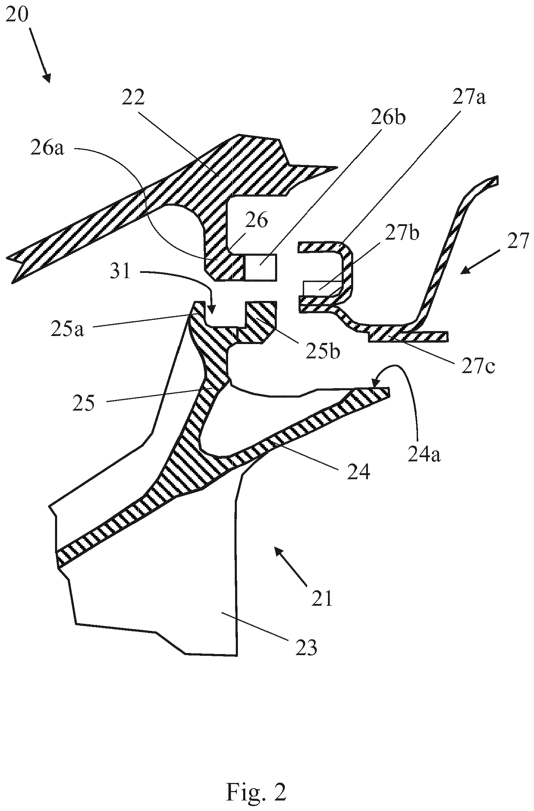

**Fig. 2** zeigt eine erfindungsgemäße Leitschaufelanordnung 20 im noch nicht zusammengesetzten Zustand, und zwar in einem Axialschnitt (geschnittene Seitenansicht). Die Leitschaufelanordnung 20 weist ein Leitschaufelsegment 21 sowie ein Gehäuseteil 22 auf, wovon jeweils ein Ausschnitt dargestellt ist. Konkret ist im Falle des Leitschaufelsegments 21 ein Teil der Leitschaufel 23 sowie das radial außerhalb davon angeordneten Außendeckband 24 zu erkennen. Am Außendeckband 24 ist ein hinterer Leitschaufelhaken 25 angeordnet, der formschlüssig mit einem Gehäusehaken 26 des Gehäuseteils 22 ineinander greift. Ferner gibt es ein Sicherungselement 27, dass der Radialsicherung und zugleich Abdichtung dient (siehe unten im Detail).

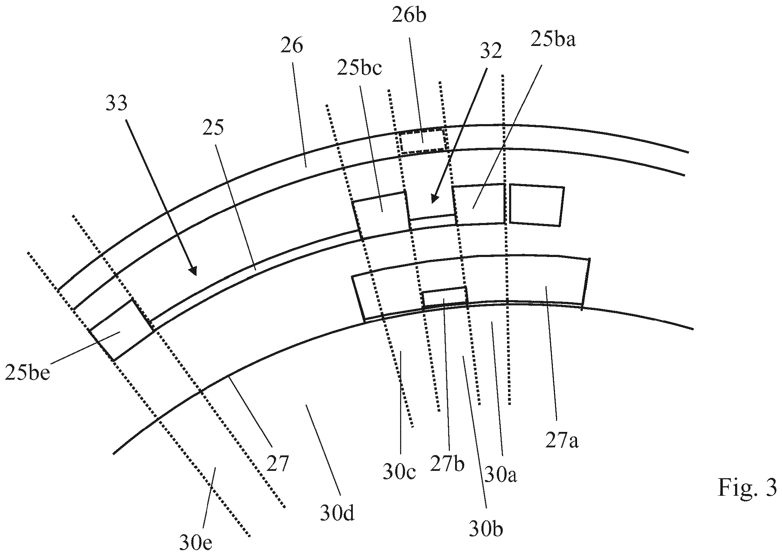

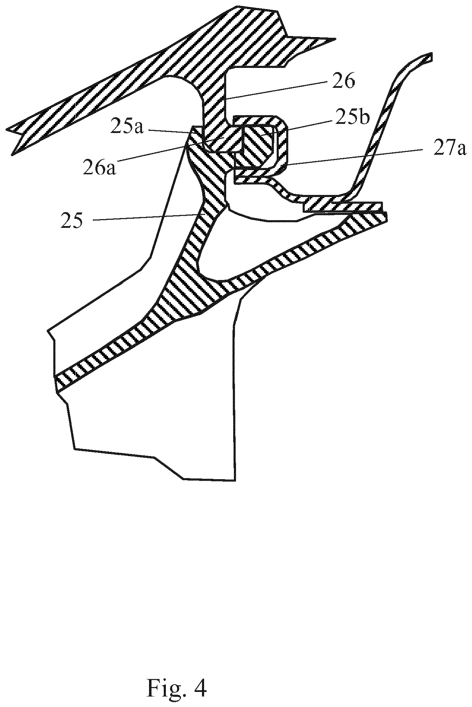

Im Folgenden wird ergänzend auch auf **Fig. 3** verwiesen, die die ineinandergreifenden Teile des Leitschaufelhakens 25, des Gehäusehakens 26, sowie das Sicherungselement 27 zeigt. Ferner wird auf **Fig. 4** verwiesen, die den zusammengesetzten Zustand zeigt. In einem ersten Umfangssegment 30 A bilden eine vordere Wand 25 A und eine hintere Wand 25 B des Leitschaufelhakens 25 eine nach radial außen offene Nut 31. In Figur 3 liegt die Beobachtungsebene in dieser Nut und fällt der Blick auf die hintere Wand 25 B. In der Nut 31 ist ein Ringabschnitt 26 A des Gehäusehakens 26 axial gehalten.

In einem zweiten Umfangssegment 30 B ist die hintere Wand 25 B unterbrochen. In diese Unterbrechung 32 greift der Gehäusehaken 26 mit einem an dem Ringabschnitt 26 A nach axial hinten hervortretenden Nocken 26 B ein. Dessen Position ist in Figur 3 strichliert angedeutet (der Nocken 26 B erstreckt sich hinterhalb der Zeichenebene). In einem dritten Umfangssegment 30 C ist die hintere Wand 25 B wieder vorhanden, sodass der Nocken 26 B und damit das Gehäuseteil 22 umfangsgesichert ist.

In dieser Hinsicht ist mit der erfindungsgemäßen Anordnung eine Axial- und zugleich Umfangssicherung realisiert, und zwar ohne gesonderte Stifte oder Sicherungsringe etc. Hinsichtlich der Vorteile wird ausdrücklich auf die Beschreibungseinleitung verwiesen.

In einem vierten Umfangssegment 30 D ist die hintere Wand 25 B erneut unterbrochen, wobei in dieser weiteren Unterbrechung 33 kein Nocken angeordnet ist. Sie dient der mechanischen Entlastung hinsichtlich der durch Temperaturgradienten erzeugten mechanischen Spannungen, vgl. die Beschreibungseinleitung im Einzelnen.

In einem fünften Umfangssegment 30 E ist die hintere Wand 25 B wiederum vorhanden, die Wandbereiche 25 BA und 25 BE sichern das Leitschaufelsegment 21 gegen eine Drehung um die Hochachse.

Das Sicherungselement 27 bildet mit einem Abschnitt 27 A eine nach vorne offene U-Form, welche im zusammengesetzten Zustand den Leitschaufelhaken 25 (insbesondere die hintere Wand 25 B) und den Gehäusehaken 26 (den Ringabschnitt 26 A und den Nocken 26 B umgreift und radial beisammen hält. Das Sicherungselement 27 weist ferner einen Nocken 27 B auf, der in der Unterbrechung 32 im zweiten Umfangssegment 30 B angeordnet ist und eine Umfangssicherung schafft.

Ferner weist das Sicherungselement 27 einen Dichtabschnitt 27 C auf, der an einer Außenfläche 24 A des Außendeckbands 24, an dessen Hinterkante grenzend, anliegt und eine Abschirmung zum Heißgaskanal hin schafft.

**BEZUGSZEICHENLISTE**

| | |
|---|---|
| Strömungsmaschine | 1 |
| Verdichter | 1 A |
| Brennkammer | 1 B |
| Turbine | 1 C |
| Längsachse | 2 |
| Heißgaskanal | 3 |
| Leitschaufel | 20 |
| Leitschaufelsegment | 21 |
| Gehäuseteil | 22 |
| Leitschaufel | 23 |
| Außendeckband | 24 |
| Außenfläche | 24 A |
| Leitschaufelhaken (hinterer) | 25 |
| Vordere Wand | 25 A |
| Hintere Wand | 25 B |
| Wandbereich | 25 BA, BC, BE |
| Gehäusehaken | 26 |
| Ringabschnitt | 26 A |
| Nocken | 26 B |
| Sicherungselement | 27 |
| U-förmiger Abschnitt | 27 A |
| Nocken | 27 B |
| Dichtabschnitt | 27 C |
| Umfangssegmente | 30 |
| Erstes | 30 A |
| Zweites | 30 B |
| Drittes | 30 C |
| Viertes | 30 D |
| Fünftes | 30 E |
| Unterbrechung | 32 |
| Weitere Unterbrechung | 33 |

## Patentansprüche

1. Leitschaufelanordnung (20) für eine Strömungsmaschine (1), mit
einem Leitschaufelsegment (21) und einem Gehäuseteil (22), die aneinander befestigt sind,
wozu ein hinterer Leitschaufelhaken (25), der sich bezogen auf eine Längsachse (2) der Strömungsmaschine (1) von einem Außendeckband (24) des Leitschaufelsegments (21) nach radial außen erhebt, und ein Gehäusehaken (26), der radial innen umlaufend an dem Gehäuseteil (22) angeordnet ist, formschlüssig ineinandergreifen,
wobei, in einem ersten Umfangssegment (30 A) der Leitschaufelanordnung (20), der Leitschaufelhaken (25) eine vordere Wand (25 A) und eine hintere Wand (25 B) aufweist und damit eine nach radial außen offene Nut (31) bildet, in welcher ein Ringabschnitt (26 A) des Gehäusehakens (26) angeordnet und axial gehalten ist, **dadurch gekennzeichnet, dass**,
in einem zweiten Umfangssegment (30 B) der Leitschaufelanordnung (20), die hintere Wand (25 B) des Leitschaufelhakens (25) mit einer Unterbrechung (32) vorgesehen ist und an dem Ringabschnitt (26 A) des Gehäusehakens (26) ein nach axial hinten hervortretender Nocken (26 B) angeordnet ist, der sich nach axial hinten in die Unterbrechung (32) der hinteren Wand (25 B) hinein erstreckt und darin zur Umlauffixierung gehalten ist.

2. Leitschaufelanordnung (20) nach Anspruch 1, bei welcher, in einem dritten Umfangssegment (30 C) der Leitschaufelanordnung (20), welches auf das zweite Umfangssegment (30 B) mit der Unterbrechung (32) folgt, die vordere Wand (25 A) zusammen mit der hinteren Wand (25 B) wieder eine nach radial außen offene Nut (31) bildet, in welcher der Ringabschnitt (26 A) des Gehäusehakens (26) angeordnet und axial gehalten ist.

3. Leitschaufelanordnung (20) nach Anspruch 2, bei welcher, in einem vierten Umfangssegment (30 D) der Leitschaufelanordnung (20), welches auf das dritte Umfangssegment (30 C) mit der Unterbrechung (32) folgt, die hintere Wand (25 B) des Leitschaufelhakens (25) mit einer weiteren Unterbrechung (33) vorgesehen ist.

4. Leitschaufelanordnung (20) nach Anspruch 3, bei welcher die weitere Unterbrechung (33) gehäusehakenfrei ist, darin also kein weiterer Nocken des Gehäusehakens (26) angeordnet ist.

5. Leitschaufelanordnung (20) nach Anspruch 3 oder 4, bei welcher, in einem fünften Umfangssegment (30 E) der Leitschaufelanordnung (20), welches auf das vierte Umfangssegment (30 D) mit der weiteren Unterbrechung (33) folgt, die vordere Wand (25 A) zusammen mit der hinteren Wand (25 B) wieder eine nach radial außen offene Nut (31) bildet, in welcher der Ringabschnitt (26 A) des Gehäusehakens (26) angeordnet und axial gehalten ist.

6. Leitschaufelanordnung (20) nach Anspruch 5, bei welcher das fünfte Umfangssegment (30 E) an ein umlaufseitiges Ende des Außendeckbands (24) grenzt.

7. Leitschaufelanordnung (20) nach einem der vorstehenden Ansprüche, bei welcher das erste Umfangssegment (30 A) an ein umlaufseitiges Ende des Außendeckbands (24) grenzt.

8. Leitschaufelanordnung (20) nach einem der vorstehenden Ansprüche, bei welchem sich die vordere Wand (25 A) des Leitschaufelhakens (25) unterbrechungsfrei durchgehend von einem umlaufseitigen Ende des Leitschaufelsegments (21) zum entgegengesetzten umlaufseitigen Ende erstreckt.

9. Leitschaufelanordnung (20) nach einem der vorstehenden Ansprüche mit einem Sicherungselement (27), welches in einem Axialschnitt betrachtet eine nach vorne offene U-Form bildet, welche den Leitschaufelhaken (25) und den Gehäusehaken (26) zumindest segmentweise umschließt.

10. Leitschaufelanordnung (20) nach Anspruch 9, bei welcher, in einem Axialschnitt in dem ersten Umfangssegment (30 A) betrachtet, der Gehäusehaken (26) mit dem Ringabschnitt (26 A) eine L-Form mit einem nach hinten orientierten Schenkel bildet, der von dem Sicherungselement (27) nach radial außen eingefasst wird.

11. Leitschaufelanordnung (20) nach Anspruch 9 oder 10, bei welcher das Sicherungselement (27) einen Dichtabschnitt (27 C) aufweist, der an einer nach radial außen weisenden Außenfläche (24 A) des Außendeckbands (24) des Leitschaufelsegments (21) anliegt, und/oder
bei welcher das Sicherungselement (27) eine Gaskanalbegrenzung bildet, welche radial an dem Leitschaufelsegment (21) benachbarte Laufschaufeln angrenzt, insbesondere einen Einlaufbelag für die Laufschaufeln aufweist.

12. Leitschaufelanordnung (20) nach Anspruch 11, bei welcher der Dichtabschnitt (27 C) des Sicherungselements (27) jedenfalls auch in einem Bereich der Außenfläche (24 A) des Außendeckbands (24) anliegt, der an die Hinterkante des Außendeckbands (24) grenzt

13. Leitschaufelanordnung (20) nach einem der vorstehenden Ansprüche 9 bis 12, bei welcher, in dem zweiten Umfangssegment (30 B) der Leitschaufelanordnung (21), an dem Sicherungselement (27) ein nach axial vorne hervortretender Nocken (27 B) vorgesehen ist, der gemeinsam mit dem Nocken (26 B) des Gehäusehakens (26) in der Unterbrechung (32) der hinteren Wand (25 B) des Leitschaufelhakens (25) angeordnet ist.

14. Turbinenmodul mit einer Leitschaufelanordnung (20) nach einem der vorstehenden Ansprüche.

15. Verwendung einer Leitschaufelanordnung (20) nach einem der Ansprüche 1 bis 13 oder eines Turbinenmoduls gemäß Anspruch 14 in einer Strömungsmaschine (1), insbesondere in einem Strahltriebwerk.

## Claims

1. Guide vane arrangement (20) for a turbomachine (1), comprising a guide vane segment (21) and a housing part (22) which are attached to one another, for which purpose a rear guide vane hook (25), which rises radially outward from an outer shroud (24) of the guide vane segment (21) in relation to a longitudinal axis (2) of the turbomachine (1), and a housing hook (26), which is arranged so as to extend radially on the inside on the housing part (22), interlock in a form-fitting manner, the guide vane hook (25), in a first circumferential segment (30 A) of the guide vane arrangement (20), having a front wall (25 A) and a rear wall (25 B) and thus forming a radially outwardly open groove (31), in which an annular portion (26 A) of the housing hook (26) is arranged and axially held, **characterized in that**, in a second circumferential segment (30 B) of the guide vane arrangement (20), the rearwall (25 B) of the guide vane hook (25) is provided with an interruption (32) and, on the annular portion (26 A) of the housing hook (26), an axially rearward protruding cam (26 B) is arranged which extends axially rearward into the interruption (32) in the rear wall (25 B) and is held therein for circumferential fixing.

2. Guide vane arrangement (20) according to claim 1, in which, in a third circumferential segment (30 C) of the guide vane arrangement (20), which follows the second circumferential segment (30 B) having the interruption (32), the frontwall (25 A) forms again, together with the rear wall (25 B), a radially outwardly open groove (31) in which the annular portion (26 A) of the housing hook (26) is arranged and axially held.

3. Guide vane arrangement (20) according to claim 2, in which, in a fourth circumferential segment (30 D) of the guide vane arrangement (20), which follows the third circumferential segment (30 C) having the interruption (32), the rearwall (25 B) of the guide vane hook (25) is provided with a further interruption (33).

4. Guide vane arrangement (20) according to claim 3, in which the further interruption (33) is free of housing hooks, i.e. no further cam of the housing hook (26) is arranged therein.

5. Guide vane arrangement (20) according to eitherclaim 3 or claim 4, in which, in a fifth circumferential segment (30 E) of the guide vane arrangement (20), which follows the fourth circumferential segment (30 D) having the further interruption (33), the front wall (25 A) forms again, together with the rear wall (25 B), a radially outwardly open groove (31) in which the annular portion (26 A) of the housing hook (26) is arranged and axially held.

6. Guide vane arrangement (20) according to claim 5, in which the fifth circumferential segment (30 E) adjoins a circumferential end of the outershroud (24).

7. Guide vane arrangement (20) according to any of the preceding claims, in which the first circumferential segment (30 A) adjoins a circumferential end of the outershroud (24).

8. Guide vane arrangement (20) according to any of the preceding claims, in which the front wall (25 A) of the guide vane hook (25) extends continuously without interruption from one circumferential end of the guide vane segment (21) to the opposite circumferential end.

9. Guide vane arrangement (20) according to any of the preceding claims, having a securing element (27) which, viewed in an axial section, forms a forwardly open U-shape which encloses the guide vane hook (25) and the housing hook (26) at least in segments.

10. Guide vane arrangement (20) according to claim 9, in which, viewed in an axial section in the first circumferential segment (30 A), the housing hook (26) having the annular portion (26 A) forms an L-shape having a rearward oriented leg which is bordered radially outwardly by the securing element (27).

11. Guide vane arrangement (20) according to either claim 9 or claim 10, in which the securing element (27) has a sealing portion (27 C) which abuts a radially outwardly facing outer surface (24 A) of the outer shroud (24) of the guide vane segment (21), and/or in which the securing element (27) forms a gas channel delimitation which radially adjoins rotor blades that are adjacent to the guide vane segment (21), in particular has an inlet coating for the rotor blades.

12. Guide vane arrangement (20) according to claim 11, in which the sealing portion (27 C) of the securing element (27) also abuts in any case in a region of the outer surface (24 A) of the outer shroud (24), which adjoins the rear edge of the outer shroud (24).

13. Guide vane arrangement (20) according to any of the preceding claims 9 to 12, in which, in the second circumferential segment (30 B) of the guide vane arrangement (21), an axially forward protruding cam (27 B) is provided on the securing element (27), which cam is arranged together with the cam (26 B) of the housing hook (26) in the interruption (32) in the rear wall (25 B) of the guide vane hook (25).

14. Turbine module having a guide vane arrangement (20) according to any of the preceding claims.

15. Use of a guide vane arrangement (20) according to any of claims 1 to 13 or a turbine module according to claim 14 in a turbomachine (1), in particular in a jet engine.

## Revendications

1. Agencement d'aube directrice (20) destiné à une turbomachine (1), comportant un segment d'aube directrice (21) et une partie de boîtier (22), lesquels sont fixés l'un à l'autre,
ce pourquoi un crochet d'aube directrice arrière (25), qui est soulevé radialement vers l'extérieur à partir d'un carénage extérieur (24) du segment d'aube directrice (21), par rapport à un axe longitudinal (2) de la turbomachine (1), et un crochet de boîtier (26), qui est disposé de façon périphérique radialement à l'intérieur sur la partie de boîtier (22), viennent en prise l'un dans l'autre par complémentarité de forme,
le crochet d'aube directrice (25) présentant, dans un premiersegment circonférentiel (30 A) de l'agencement d'aube directrice (20), une paroi avant (25 A) et une paroi arrière (25 B) et formant ainsi une rainure (31) ouverte radialement vers l'extérieur, dans laquelle une section annulaire (26 A) du crochet de boîtier (26) est disposée et maintenue axialement, **caractérisé en ce**
**que** la paroi arrière (25 B) du crochet d'aube directrice (25) est prévue avec un creux (32) dans un deuxième segment circonférentiel (30 B) de l'agencement d'aube directrice (20) et qu'une came (26 B) en saillie axialement vers l'arrière est disposée dans la section annulaire (26 A) du crochet de boîtier (26), laquelle came s'étend axialement vers l'arrière dans le creux (32) de la paroi arrière (25 B) et y est maintenue pour une fixation périphérique.

2. Agencement d'aube directrice (20) selon la revendication 1, dans lequel, dans un troisième segment circonférentiel (30 C) de l'agencement d'aube directrice (20), qui suit le deuxième segment circonférentiel (30 B) avec le creux(32), la paroi avant (25 A) forme à nouveau, conjointement avec la paroi arrière (25 B), une rainure (31) ouverte radialement vers l'extérieur, dans laquelle la section annulaire (26 A) du crochet de boîtier (26) est disposée et maintenue axialement.

3. Agencement d'aube directrice (20) selon la revendication 2, dans lequel, dans un quatrième segment circonférentiel (30 D) de l'agencement d'aube directrice (20), qui suit le troisième segment circonférentiel (30 C) avec le creux(32), la paroi arrière (25 B) du crochet d'aube directrice (25) est prévue avec un autre creux(33).

4. Agencement d'aube directrice (20) selon la revendication 3, dans lequel le creux supplémentaire (33) est exempt de crochets de boîtier, c'est-à-dire qu'aucune autre came du crochet de boîtier (26) n'y est disposée.

5. Agencement d'aube directrice (20) selon la revendication 3 ou 4, dans lequel, dans un cinquième segment circonférentiel (30 E) de l'agencement d'aube directrice (20), qui suit le quatrième segment circonférentiel (30D) avec le creux supplémentaire (33), la paroi avant (25 A) forme à nouveau, conjointement avec la paroi arrière (25 B), une rainure (31) ouverte radialement vers l'extérieur, dans laquelle la section annulaire (26 A) du crochet de boîtier (26) est disposée et maintenue axialement.

6. Agencement d'aube directrice (20) selon la revendication 5, dans lequel le cinquième segment circonférentiel (30 E) jouxte une extrémité périphérique du carénage extérieur (24).

7. Agencement d'aube directrice (20) selon l'une des revendications précédentes, dans lequel le premier segment circonférentiel (30A) jouxte une extrémité périphérique du carénage extérieur (24).

8. Agencement d'aube directrice (20) selon l'une des revendications précédentes, dans lequel la paroi avant (25 A) du crochet d'aube directrice (25) s'étend en continu depuis une extrémité périphérique du segment d'aube directrice (21) jusqu'à l'extrémité périphérique opposée.

9. Agencement d'aube directrice (20) selon l'une des revendications précédentes, comportant un élément de fixation (27), lequel, vu en coupe axiale, forme une forme en U ouverte vers l'avant qui renferme, au moins par segments, le crochet d'aube directrice (25) et le crochet de boîtier (26).

10. Agencement d'aube directrice (20) selon la revendication 9, dans lequel, vu en coupe axiale dans le premier segment circonférentiel (30 A), le crochet de boîtier (26) forme, avec la section annulaire (26 A), une forme en L comportant une branche orientée vers l'arrière et étant enchâssée radialement vers l'extérieur par l'élément de fixation (27).

11. Agencement d'aube directrice (20) selon la revendication 9 ou 10, dans lequel l'élément de fixation (27) présente une section d'étanchéité (27 C) qui repose contre une surface extérieure (24 A) tournée radialement vers l'extérieur du carénage extérieur (24) du segment d'aube directrice (21), et/ou dans lequel l'élément de fixation (27) forme une délimitation de canal de gaz qui jouxte radialement des aubes mobiles adjacentes au segment d'aube directrice (21), et présente en particulier un revêtement d'entrée destiné aux aubes mobiles.

12. Agencement d'aube directrice (20) selon la revendication 11, dans lequel la section d'étanchéité (27 C) de l'élément de fixation (27) repose également dans tous les cas dans une zone de la surface extérieure (24 A) du carénage extérieur (24), laquelle zone jouxte le bord arrière du carénage extérieur (24).

13. Agencement d'aube directrice (20) selon l'une des revendications 9 à 12 précédentes, dans lequel, dans le deuxième segment circonférentiel (30 B) de l'agencement d'aube directrice (21), sur l'élément de fixation (27), est prévue une came (27 B) faisant saillie axialement vers l'avant, laquelle came est disposée, conjointement avec la came (26 B) du crochet de boîtier (26), dans le creux(32) de la paroi arrière (25 B) du crochet d'aube directrice (25).

14. Module de turbine comportant un agencement d'aube directrice (20) selon l'une des revendications précédentes.

15. Utilisation d'un agencement d'aube directrice (20) selon l'une des revendications 1 à 13 ou d'un module de turbine selon la revendication 14 dans une turbomachine (1), en particulier dans un turboréacteur.
